# EUROPÄISCHE PATENTSCHRIFT

(11) **EP 1 749 069 B1**
(45) Veröffentlichungstag und Bekanntmachung des Hinweises auf die Patenterteilung: **26.08.2009**
(21) Anmeldenummer: 05739706.9
(22) Anmeldetag: 12.05.2005
(51) Int. Cl.: C09D 7/00

(54) **ENTSCHÄUMER-ZUSAMMENSETZUNGEN FÜR WASSERVERDÜNNBARE LACKSYSTEME**
ANTI-FOAMING COMPOSITIONS FOR WATER-SOLUBLE PAINT SYSTEMS
COMPOSITIONS ANTIMOUSSES POUR VERNIS DILUABLES A L'EAU

(30) Priorität: 21.05.2004 DE 102004024947
(43) Veröffentlichungstag der Anmeldung: 07.02.2007
(73) Patentinhaber: Cognis IP Management GmbH, 49589 Düsseldorf (DE)
(72) Erfinder: PÜTZ, Hermann-Josef, 51379 Leverkusen (DE); DIERKER, Markus, 40597 Düsseldorf (DE); SCHULTE, Heinz-Günther, 41564 Kaarst (DE)
(86) Internationale Anmeldenummer: PCT/EP2005/005159
(87) Internationale Veröffentlichungsnummer: WO 2005/113691

(56) Entgegenhaltungen:
- DE-A1- 19 751 288

## Beschreibung

### Beschreibung der Erfindung

Aufgabe der vorliegenden Erfindung war es, Entschäumer-Zusammensetzungen für wasserverdünbare Lacksysteme zur Verfügung zu stellen.

Diese Entschäumer sollten insbesondere folgende Eigenschaften aufweisen: Sie sollten gute entschäumende Eigenschaften aufweisen und zwar
- während der Herstellung der Lacksysteme und
- während der Spritzapplikation (z.B. pneumatisches Druckluftspritzen mit 4-5 bar Zerstäuberluft, Airless-spritzen, Hochrotationszerstäuber mit Elektrostatik).

Die Entschäumer sollten darüber hinaus die Aufgabe lösen, die Kochergrenze von wasserverdünnbaren Einbrennlacken zu erhöhen.

Zum Verständnis des Begriffs der Kochergrenze seien zunächst die dem Fachmann geläufigen Zusammenhänge zum Begriff Kocher geschildert: Der Fachmann bezeichnet kleine, muldenförmige Vertiefungen in Lackfilme als Krater. Eine spezielle Form von Kratern sind die sogenannten Kocher, die z.B. bei Einbrennlacken in Anwesenheit von leichtflüchtigen Lösungsmitteln entstehen. Diese verdampfen beim Trocknen relativ schnell aus den oberen Schichten des Lackfilms, wodurch die Viskosität an der Oberfläche ansteigt und diese rasch schließt. Die verdampfenden Lösungsmittel aus den unteren Lackschichten bilden dann Blasen, die aufplatzen und durch den an der Oberfläche bereits hochviskosen Lack nicht mehr geschlossen werden können. Im trockenen Film zeigen sich dann Nadelstiche oder Krater. Das Kocherphänomen tritt auch bei wasserhaltigen Lacksystemen auf. Hierbei verdunstet dann Wasser von der Oberfläche der Lackschicht, begleitet vom gerade geschilderten Viskositätsanstieg. Wenn dann später das in tieferen Lackschichten befindliche Wasser verdampft, bilden sich Bläschen, die beim Aufplatzen zu dem geschilderten Effekt der Kraterbildung (auch als Kocher oder Nadelstiche oder Pinholes bezeichnet) führen. Außerdem können sich Bläschen in oberflächennahen Bereichen auch dann optisch unangenehm bemerkbar machen, wenn sie noch nicht aufgeplatzt sind, weil sie das einheitliche Erscheinungsbild der Oberfläche stören (Kocherblasen).

Ein Lacksystem ist nun im Hinblick auf das unerwünschte Kocherphänomen umso effektiver, je dicker die Lackschicht ist, die frei von Kocherblasen, Nadelstichen oder Pinholes ist. In diesem Sinne wird unter dem Begriff "Kochergrenze" im Rahmen der vorliegenden Erfindung die ermittelte Trockenschichtdicke des ausgehärteten Lackes, verstanden, bis zu der noch keine Kocherblasen, Nadelstiche oder Pinholes erkennbar sind. Erst wenn die durch die Kochergrenze gegebene kritische Schichtdicke des ausgehärteten Lackes überschritten wird, treten diese unerwünschten Kocherphänomene auf. Die Bestimmung der Kochergrenze erfolgt durch Lackieren eines sichtbaren Keils, also einen kontinuierlichen Anstiegs der Schichtdicke auf einer Prüfplatte.
Die Erhöhung der Kochergrenze, also der kritischen Trockenschichtdicke des Lackes, ermöglicht, dass der Lack in einer angemessenen Schichtdicke aufgetragen werden kann, ohne dass es beim Einbrennen zu Filmdefekten durch plötzlich verdampfendes Wasser oder Lösemittel kommt. Dies ist einerseits aus ökonomischen Gründen erwünscht, andererseits erhöht es die Anwendungssicherheit; denn es kommt immer wieder vor, dass Lack bei manuellem Auftrag zu dick gespritzt wird. Auch bei automatischem Auftrag durch Roboter kann es durch Luftwirbel, Ablaufen an senkrechten Flächen, Temperatur- und Viskositätsschwankungen sowie in Überlappungsbereichen zu höheren Schichtstärken kommen. Die Auswirkung im fertigen Lackfilm zeigen sich dann in Form von Kocherblasen, Nadelstichen oder Pinholes.

Eine weitere Aufgabe war es, daß die erfindungsgemäßen Entschäumer keine negativen Eigenschaften auf den Lackfilm aufweisen sollten (gute Verträglichkeiten), keine Krater verursachen, keinen Glanzverlust verursachen, die Haftung zum Untergrund nicht verschlechtern, die Haftung zur nachfolgenden Lackschicht nicht beeinträchtigen, den optischen Eindruck ("appearance") nicht negativ beeinträchtigen.
Eine weitere Aufgabe war es, daß die erfindungsgemäßen Entschäumer gute Verlaufseigenschaften und eine gute Untergrundbenetzungen des damit ausgerüsteten Lackes garantieren.

Überraschenderweise wurde nun gefunden, daß ternäre Zusammensetzungen enthaltend Glyceride, aliphatische Kohlenwasserstoffe und Anlagerungsprodukte von Ethylenoxid (EO) und/oder Propylenoxid (PO) an Fettalkohole die genannten Aufgaben in jeder Hinsicht ausgezeichnet erfüllen.

Gegenstand der vorliegenden Erfindung sind daher Entschäumer-Zusammensetzungen für wasserverdünbare Lacksysteme enthaltend
a) ein oder mehrere Glyceride,
b) ein oder mehrere aliphatische Kohlenwasserstoffe und
c) ein oder mehrere Anlagerungsprodukte von Ethylenoxid (EO) und/oder Propylenoxid (PO) an Fettalkohole mit 8 bis 24 C-Atomen, wobei diese Anlagerungsverbindungen gegebenenfalls endgruppenverschlossen sein können.

### Zu den Komponenten a), b) und c)

### a) Glyceride

Unter Glyceriden werden im Rahmen der vorliegenden Erfindung Mono-, Di- und Triester des Glycerins mit Fettsäuren mit 8 bis 24 C-Atomen verstanden. Im Rahmen der vorliegenden Erfindung werden wie in der Fachwelt üblich Monoester des Glycerins mit Fettsäuren als Monoglyceride, Diester des Glycerins mit Fettsäuren als Diglyceride und Triester des Glycerins mit Fettsäuren als Triglceride bezeichnet.
Bei den Monoestern spielt es keine Rolle, ob das den Monoglyceriden zu Grunde liegende Glycerin in 1- oder in 2-Stellung verestert ist Bei den Diestern spielt es keine Rolle, ob das den Diglyceriden zu Grunde liegende Glycerin in 1- und 2-Stellung oder in 1- und 3-Stellung verestert ist.
Es können auch Mischungen verschiedener Mono-, Di- und Triester des Glycerins mit den genannten Fettsäuren eingesetzt werden.

Die Glyceride können in den erfindungsgemäßen Zusammensetzungen als solche oder in Form technischer Mischungen enthalten sein. Für solche technische Mischungen ist charakteristisch, daß sie - insbesondere wenn sie sich von natürlich nachwachsenden Rohstoffen ableiten - Fettsäurebausteine unterschiedlicher C-Kettenlänge enthalten.

Erfindungsgemäß sind Diglyceride besonders bevorzugt. Solche Diglyceride technischer Qualität können auch Mono- und/oder Triglyceride enthalten. Dabei ist es bevorzugt, daß der Anteil an Diglyceriden 20 - 80 Gew.-% - bezogen auf die Gesamtmenge an Mono-/Di-, Mono-/Tri- bzw. Mono-/Di-/Triglyceriden - beträgt. Dabei ist ein Anteil an Diglyceriden von 35 - 70 Gew.-% und insbesondere von 45 - 60 Gew.-% bevorzugt.

In Diglyceriden technischer Qualität beträgt der Anteil an freiem Glycerin vorzugsweise unterhalb von 5 Gew.-%, insbesondere liegt er unter 3 Gew.-% und ganz besonders bevorzugt unterhalb von 1,5 Gew.-%.

Wie gesagt liegen die Kettenlängen der Fettsäurebausteine in den Glyceriden im Bereich von 8 bis 24 C-Atomen. Dabei ist ein Bereich von 12 bis 18 C-Atomen bevorzugt.

Die Fettsäurebausteine sind vorzugsweise natürlichen Ursprungs und können gesättigt oder ungesättigt sein. In einer Ausführungsform setzt man solche Glyceride ein, deren Fettsäurebausteine in hohem Maße ungesättigt sind. Beispiele für geeignete Fettsäurebausteine sind etwa Fettsäuren ex Sonnenblumen-, Raps-, Soja-, Kokos- oder Tallöl. Beispiele besonders geeigneter Fettsäurebausteine der Diglyceride sind etwa Ölsäure, Linolsäure, Linolensäure, konjugierte Linolsäuren.

### b) aliphatische Kohlenwasserstoffe

Die aliphatischen Kohlenwasserstoffe (b) können linear, verzweigt oder cyclisch sein. Darüber hinaus können sie gesättigt oder ein- oder mehrfach olefinisch ungesättigt sein. Sie dürfen maximal 18 Gew.-% (bezogen auf die Gesamtheit von Kohlenwasserstoffen) an aromatischen Kohlenwasserstoffen enthalten. Vorzugsweise sind die Verbindungen (b) arm an Aromaten und enthalten weniger als 1 Gew.-% und insbesondere weniger als 0,1 Gew.-% (bezogen auf die Gesamtheit von Kohlenwasserstoffen) an aromatischen Kohlenwasserstoffen.

Die Verbindungen (b) weisen insbesondere Siedebereichsgrenzen im bereich von 140 - 280 °C auf. Dabei ist ein Bereich von 170 - 260 °C und insbesondere von 180 - 240 °C bevorzugt.

### c) Anlagerungsprodukte von (EO) und/oder (PO) an Fettalkohole

Als weitere Komponente werden in den erfindungsgemäßen Zusammensetzungen Anlagerungsprodukte von Ethylenoxid (EO) und/oder Propylenoxid (PO) an Fettalkohole mit 8 bis 24 C-Atomen eingesetzt, wobei diese Anlagerungsverbindungen gegebenenfalls endgruppenverschlossen sein können. Unter "endgruppenverschlossen" ist zu verstehen, daß die freie OH-Gruppe der Anlagerungsprodukte von Ethylenoxid (EO) und/oder Propylenoxid (PO) an Fettalkohole mit 8 bis 24 C-Atomen in veretherter Form vorliegt und zwar als Rest OR, wobei R für einen Alkylrest mit 1 bis 4 C-Atomen steht oder auch ein Benzylrest sein kann. R kann demnach Methyl, Ethyl, n-Propyl-, i-Propyl, n-Butyl, i-Butyl, sec Butyl oder Benzyl bedeuten, dabei sind Methyl und die genannten Butylreste bevorzugt.

Beispiele für geeignete Substanzen vom Typ c) sind etwa Dehypon LS 24, Dehypon LS 36, Dehypon LS 45, Dehypon LS 54, Dehypon LT 054, Dehypon LS 104 (alles Handelsprodukte der Firma Cognis Deutschland GmbH & Co. KG).

Vorzugsweise werden Anlagerungsprodukte von Ethylenoxid (EO) und/oder Propylenoxid (PO) an Fettalkohole mit 8 bis 24 C-Atomen eingesetzt, die eine freie OH-Gruppe aufweisen, also nicht endgruppenverschlossen sind.

Vorzugsweise beträgt die Kettenlänge der Fettalkohole in den genannten Anlagerungsprodukten 10 bis 16 und insbesondere 12 bis 14 C-Atome.
Die Addukte enthalten in Summe mindestens 2 mol EO und/oder PO pro mol Fettalkohol. Die Menge an EO ist dabei vorzugsweise 0 bis 10 und insbesondere 2 bis 5 mol pro mol Fettalkohol. Die Menge an PO beträgt vorzugsweise 0 bis 10 und insbesondere 2 bis 4 mol pro mol Fettalkohol. Die Addukte enthalten in Summe vorzugsweise 2 bis 15, insbesondere 4 bis 9 mol EO und/oder PO pro mol Fettalkohol.

### Zu den Entschäumer-Zusammensetzungen

Die Entschäumer-Zusammensetzungen für wasserverdünbare Lacksysteme enthalten die oben näher beschriebenen Komponenten a), b) und c). Dabei ist - bezogen auf die Summe der Komponenten a), b) und c) in den Entschäumer-Zusammensetzungen -
- der Anteil von Komponente a) vorzugsweise 5 bis 80 Gew.-% und insbesondere 20 bis 60 Gew.-%,
- der Anteil von Komponente b) vorzugsweise 5 bis 90 Gew.-% und insbesondere 30 bis 60 Gew.-% und
- der Anteil von Komponente c) vorzugsweise 5 bis 60 Gew.-% und insbesondere 10 bis 40 Gew.-%.
Gewünschtenfalls können die Entschäumer-Zusammensetzungen noch zusätzliche weitere Komponenten enthalten, beispielsweise Oxoöle, Fettsäureester, Kieselsäure, Wachse, reine und modifizierte Silikonöle.

Die erfindungsgemäßen Entschäumer-Zusammensetzungen werden in wasserverdünnbaren Lacksystemen eingesetzt. Untersuchungen der Anmelderin haben überraschenderweise gezeigt, daß in wasserverdünnbaren Einbrennfüllern die Kochergrenze deutlich erhöht wird und zwar um mehr als 20% im Vergleich zu den entsprechenden wasserverdünnbaren Einbrennfüllern ohne den Zusatz der erfindungsgemäßen Entschäumer. Die Oberfläche des Lackfilmes weist keine negativen Eigenschaften auf (keine Krater, Nadelstiche, Pinholes, kein Glanzverlust). Sie zeichnet sich durch gutes optisches Erscheinungsbild ("appearance") aus. Der Verlauf des Lackes wird positiv verbessert, was sich bereits visuell erkennen lässt.

### Beispiele

### Eingesetzte Substanzen

- **Fettalkohol-EO/PO:** Anlagerungsprodukt von 5 mol Ethylenoxid und 4 mol Propylenoxid an 1 mol Fettalkohol C₁₂₋₁₄ ("Dehypon LS 54" Fa.Cognis)
- **aliphatischer KW:** aliphatischer Kohlenwasserstoff ("Isopar L" der Fa. Exxon Chemical)
- **Hyflo:** Kieselgur fluxcalciniert ("Hyflo Super Cel" der Firma Celite Corporation)
- **Fascat:** Zinnoxalat ("Fascat 2001" der Firma Atofina)
- **Bayhydrol D 270:**Wasserverdünnbarer ölfreier gesättigter Polyester (Fa. Bayer)
- **Bayhydrol FT 145:** Wasserverdünnbares Fettsäure-modifiziertes Polyurethanharz ( Fa. Bayer)
- **Tallölfettsäure:** Tallölfettsäure mit Säurezahl = 199 und Jodzahl = 155 (Handelsprodukt "Sylfat 2 LT" der Firma Arizona Chemical)
- **Maprenal MF 904:** Hexamethoxymethylmelamin (HMMM) Harz (Fa. UCB)
- **DMEA Lff:** Amin (Fa. BASF AG)
- **Hydropalat 7003:** komplexer Phosphorsäureester (Fa. Cognis)
- **Spezialschwarz 4:** Russ (Fa. Degussa)
- **Tronox R-FD-I:** Titandioxid rutil (Fa. KerrMcGee)
- **Blanc fixe micro:** gefälltes Bariumsulfat (Fa. Sachtleben)
- **Talkum IT extra:** Talkum (Fa. Mondo Minerals)

### Herstellvorschriften für Diglyceride

### Beispiel 1

### Ansatz:

70 mol = 20,90 kg Tallölfettsäure
35 mol = 3,22 kg Glycerin
6,9 g Fascat

*Apparatur:* Laborreaktor, N₂-Überleitung, Wasserabscheider

### Ausführung:

Alle Komponenten wurden zusammen insgesamt 5,5 Stunden auf zunächst 200°C am Wasserabscheider erhitzt. Die Temperatur wurde im Verlaufe der Reaktion bei nachlassender Wasserabspaltung bis auf 240°C erhöht. Danach wurde auf 210°C abgekühlt und 1,5 Stunden ein Vakuum (ca. 60-70 mbar) angelegt.
Anschließend wurden 100g Hyflo zugegeben und 1 Stunde bei 80°C im Vakuum (ca. 60-70 mbar)gerührt. Schließlich wurde abgesaugt, d.h. das Produkt wurde filtriert, wobei das Hyflow am Filter zurückblieb. Durch den Einsatz von Hyflow nebst der Filtration wurde der verwendete Katalysator aus dem Produkt entfernt.
Es wurden 21,2 kg gelbes, klares Produkt erhalten. Dieses wies folgende Kennzahlen auf:
Säurezahl (SZ) = 1,2
Hydroxylzahl (OHZ) = 86

### Beispiel 2

Analog zu Beispiel 1, wobei die unter "Ansatz" beschriebenen Mengen wie folgt geändert wurden:
3,8 mol (1,071 kg) Tallölfettsäure
2 mol (0,184 kg) Glycerin
0,4 g Fascat 2001

Das Produkt wies folgende Kenndaten auf:
SZ = 1,5
OHZ = 103

### Beispiel 3

Analog zu Beispiel 2, wobei die unter "Ansatz" beschriebenen Mengen wie folgt geändert wurden:
12,2 mol (3,50 kg) Tallölfettsäure
6,1 mol (0,561 kg) Glycerin
1,2 g Fascat 2001

Das Produkt wies folgende Kenndaten auf:
SZ = 5,8
OHZ = 80

### Beispiel 4

Analog zu Beispiel 1, wobei jedoch die Reaktionszeit im unter "Ausführung" beschriebenen Schritt nicht 5,5 Stunden, sondern lediglich 3 Stunden betrag.

Das Produkt wies folgende Kenndaten auf:
SZ = 1,7
OHZ = 86

### Anwendungstechnische Versuche

### Serie I

### (vergl. hierzu Tabelle 1)

Es wurden verschiedene Abmischungen von Fettsäurediglyceriden mit aliphatischern Kohlenwasserstoff und Fettalkohol-EO/PO-Addukten in einem hellgrau pigmentierten wasserverdünnbarem Einbrennlacksystem (Bindemittelbasis: Mischung aus gesättigtem Polyester, PES/PUR-Dispersion und Melaminharz) geprüft. Herstellung und Zusammensetzung der Rezepturen sowie die damit erzielten anwendungstechnischen rgebnisse können Tabelle 1 entnommen werden. Die Versuche V6 bis V8 sind erfindungsgemäß, die Versuche V1 bis V5 dienen dem Vergleich.
Die Herstellung der Rezepturen geschah, wie ebenfalls aus Tabelle 1 hervorgeht, dadurch, daß zunächst eine Lackgrundrezeptur vorgelegt wurde. In diese Grundrezeptur wurden die Komponenten Fettsäurediglycerid, aliphatischer Kohlenwasserstoff und Fettalkohol-EO/PO-Addukt in den angegebenen Mengen durch 15-minütiges Rühren bei 5000 Umdrehungen pro Minute in einem Mahltopf mit Dissolverscheibe (Gerät: Fa. VMA Getzmann) und anschließendes 20-minütiges behandeln in einer Perlmühle mit Teflonmahlscheibe mit Glasperlen bei 4000 Umdrehungen pro Minute eingearbeitet. Anschließend wurden die angegebenen Mengen der komponenten Bayhydrol D270, destilliertes Wasser, Marprenal MF 904 und Hydropalat 140 zugegeben und 10 Minuten bei 1500 Umdrehungen pro Minute gerührt. Nach 1-tägigem Stehenlassen wurde abschließend mit DMEA ein pH-Wert im Bereich von 8,4 - 8,6 eingestellt. Die Viskosität wurde mittels DIN 4 Auslaufbecher auf eine Auslaufzeit von 30-32 s mit dest. Wasser eingestellt. Die eingestellten Lackvariationen wurden mittels Fliessbecherpistole (1,2 mm Düse, 4 bar Zerstäuberdruck) auf ein Stahlblech im Keil lackiert - die Trockenschichtdicke lag in einem Bereich von ca. 20µm bis 60µm Trockenschichtdicke. Anschließend wurde getrocknet bei folgenden Trocknungsbedingungen: 10 Minuten Ablüften bei 20 °C, 10 Minuten bei 80°C Umluftofen, 20 Minuten bei 160°C Umluftofen. Nach Abkühlung auf 20 °C wurde die Oberfläche nach folgenden Kriterien beurteilt:
- Glanz: vermessen im 20° und 60° Winkel bei einer Trockenschichtdicke von 40 µm (Glanzgradbestimmung gemäß DIN EN ISO 2813)
- Kochergrenze visuell wurde die Grenze der Kocherfreien Schicht beurteilt (also maximale Trockenschichtdicke, die frei ist von Kratern, Nadelstichen und Pinholes) und anschliessend die Trockenschichtdicke nach DIN EN ISO 2808 mittels Schichtdickenmessgerät bestimmt (Angabe in Mikrometern).
- Viskosität: Bestimmung der Auslaufzeit mit Auslaufbechern gemäß DIN EN ISO 2431
- Appearance: Als Appearance wurde die Oberflächenbeschaffenheit (Verlauf / optischer Gesamteindruck / Gleichmässigkeit der Fläche / Oberflächenstörungen wie-Dellen, Krater, Pinholes) bewertet. Die Beurteilung wurde visuell vorgenommen und in einem "Schulnotensystem" (1=sehr gut, 5=sehr schlecht) quantifiziert. Dabei wurden die getrockneten lackierten Oberflächen der Prüfplatten im Vergleich zueinander beurteilt.

### Serie II

### (vergl. hierzu Tabelle2)

Die folgenden Versuche wurden mit Zusammensetzungen durchgeführt, die ähnlich waren wie diejenigen, die in Serie 1 beschrieben sind. Bei den vorliegenden Zusammensetzungen der Serie II handelt es sich jedoch um Bindemittelmischung handelt (dementsprechend sind keine Pigmente, Füllstoffe, Dispergieradditiv und Netzmittel enthalten). Aus den Messdaten der Serie II geht insbesondere die Wirkung derEntschäumung während des Herstellprozesses hervor.

Die Herstellung der Rezeptur kann Tabelle 2 entnommen werden: Bayhydrol D270 wurde vorgelegt und dest. Wasser unter langsamem Rühren zugegeben. Anschliessend wurden Maprenal MF 904 und Bayhydrol FT 145 zugegeben und die Lösung mit DMEA auf einen pH-Wert auf 8,5 eingestellt. Danach wurde auf 100 Teile mit Wasser aufgefüllt und weitere 10 Min. bei 2000 Umdrehungen pro Minute gerührt. Nach 24 Stunden Ruhen der Bindemittellösung wurden für jeden Versuch (V1b bis V8b) je 150 g abgewogen, 1,4% der Entschäumermischungen zudosiert und 3 Minuten bei 5000 Umdrehungen pro Minute mit einem Labordissolver aufgeschäumt. Die Dichte wurde nach 1 Minute, 1 Stunde, 6 Stunden, 1 Tag und 7 Tagen im Pyknometer bestimmt. Anhand der gefundenen Werte lässt sich die entschäumende Wirkung beurteilen. Die erfindungsgemäßen Versuche (V6b bis V8b) erreichten alle bereits nach 6 Stunden ihren Endwert (= keine Lufteinschlüsse in der Bindemittellösung mehr vorhanden). Die Dichtebestimmung erfolgte nach:
- Dichtebestimmung: Pyknometer-Verfahren gemäß DIN 53217-2

### Fazit

Die Versuche der Serie I zeigen insbesondere die anwendungstechnischen Effekte bezüglich:
- Erhöhung der Kochergrenze
- Appearance
- Glanz

Die Versuche der Serie II zeigen die anwendungstechnischen Effekte bezüglich:
- Entschäumende Wirkung

Nur die erfindungsgemässen Zusammensetzungen (siehe Versuche V6a bis V8a und V6b bis V8b) zeigen im Gesamteigenschaftprofil im Vergleich zu den Vergleichsversuchen (siehe Versuche V1a bis V5a und V1b bis V5b) eine deutliche Erhöhung der Kochergrenze, eine positive Beeinflussung der Appearance bei nur sehr geringem reduziertem Glanz und einer sehr guten entschäumenden Wirkung.

**Tabelle 1**

| Versuch | | | | | | | | |
|---|---|---|---|---|---|---|---|---|
| | V1a | V2a | V3a | V4a | V5a | V6a | V7a | V8a |
| Bayhydrol D 270, 70% | 6,00 | 6,00 | 6,00 | 6,00 | 6,00 | 6,00 | 6,00 | 6,00 |
| dest. Wasser | 12,00 | 12,00 | 12,00 | 12,00 | 12,00 | 12,00 | 12,00 | 12,00 |
| Bayhydrol FT 145, 45% | 15,00 | 15,00 | 15,00 | 15,00 | 15,00 | 15,00 | 15,00 | 15,00 |
| DMEA, Lff. | 0,35 | 0,35 | 0,35 | 0,35 | 0,35 | 0,35 | 0,35 | 0,35 |
| Hydropalat 7003 | 0.60 | 0,60 | 0,60 | 0,60 | 0.60 | 0,60 | 0,60 | 0,60 |
| Spezialschwarz 4 | 0,03 | 0,03 | 0,03 | 0,03 | 0,03 | 0,03 | 0,03 | 0,03 |
| Tronox R-FD-I | 10,00 | 10,00 | 10,00 | 10,00 | 10.00 | 10,00 | 10,00 | 10,00 |
| Blane fixe micro | 14,00 | 14,00 | 14,00 | 14,00 | 14,00 | 14,00 | 14,00 | 14,00 |
| Talkum IT extra | 4,00 | 4,00 | 4,00 | 4,00 | 4,00 | 4,00 | 4,00 | 4,00 |
| | | | | | | | | |
| Fettalkohol-EO/PO(*) | | | 1,00 | | | 0,2, | 0,2 | 0,2 |
| aliphatischer KW (*) | | | | 1,00 | 0,5 | 0,4 | 0,4 | 0,4 |
| Diglycerid gemäß Beispiel 1 | | 1,00 | | | 0.5 | 0,4 | | |
| Diglycerid gemäß Beispiel 2 | | | | | | | 0,4 | |
| Diglycerid gemäß Beispiel 3 | | | | | | | | 0,4 |
| | | | | | | | | |
| 15 Min. Rühren bei 5000 Upm. | | | | | | | | |
| 20 Min. Perlmühle, mit Glasperien 4000 Upm. | | | | | | | | |
| Bayhydrol D 270, 70% | 12.50 | 12.50 | 12,50 | 12,50 | 12,50 | 12,50 | 12,50 | 12,50 |
| dest. Wasser | 20,00 | 20,00 | 20,00 | 20,00 | 20,00 | 20,00 | 20,00 | 20,00 |
| Maprenal MF 904. 95% | 3,30 | 3,30 | 3,30 | 3,30 | 3,30 | 3,30 | 3,30 | 3,30 |
| Hydropalat 140 | 0.30 | 0,30 | 0,30 | 0,30 | 0,30 | 0,30 | 0,30 | 0,30 |
| | | | | | | | | |
| 10 Min. 1500 Upm. (+1 Tag ruhen lassen) | | | | | | | | |
| pH-Wert einstellen mit DMEA auf 8,4-8,6 | | | | | | | | |
| dest. Wasser | 1,92 | 0,92 | 0,92 | 0,92 | 0,92 | 0,92 | 0,92, | 0,92 |
| Summe der Komponenten | 100,00 | 100,00 | 100,00 | 100,00 | 100,00 | 100,00 | 100,00 | 100,00 |
| | | | | | | | | |
| Anfall-Viskosität DIN4 | 60 | 76 | 110 | 56 | 77 | 87 | 85 | 84 |
| Visko einstellen auf 30-32 s DIN4 | | | | | | | | |
| Lack mit Druckluft Spritzpistole applizieren mit 4 Bar Zerstäuberdruck | | | | | | | | |
| Einbrennbedingungen: 10 Min. ablüften, 10 Min. 80°C, 20 Min. 160°C | | | | | | | | |
| Glanz 20* Winkel - 40µm | 51 | 40 | 48 | 51 | 44 | 49 | 47 | 52 |
| Glanz 60* Winkel - 40µm | 89 | 83 | 87 | 89 | 85 | 88 | 87 | 88 |
| | | | | | | | | |
| Kochefrei in µm bis: | 38 | 47 | 41 | 45 | 46 | 48 | 48 | 47 |

| | | | | | | | | |
|---|---|---|---|---|---|---|---|---|
| Versuche V1a-V5a = zum Vergleich Versuche V6a-V8a = erfindungsgemäß Mengenangaben zu den Komponenten der Rezeptur = Gewichtsteile (*) die Komponenten Fettalkohol-EO/PO und aliphat. Kohlenwassmtoff wurden vor der Zugabe zur Rezeptur miteinander gemischt | | | | | | | | |

**Tabelle 2**

| | V1b | V2b | V3b | V4b | V5b | V6b | V7b | V8b |
|---|---|---|---|---|---|---|---|---|
| Bayhydrol D 270 | 25,90 | 25,90 | 25.90 | 25,90 | 25,90 | 25,90 | 25,90 | 25,90 |
| dest: Wasser | 35,00 | 35,00 | 35,00 | 35,00 | 35,00 | 35,00 | 35,00 | 35,00 |
| Maprenal MF 904, 95% | 4,60 | 4,60 | 4,60 | 4,60 | 4,60 | 4,60 | 4,60 | 4,60 |
| Bayhadrol FT 145 | 21,00 | 21,00 | 21,00 | 21,00 | 21,00 | 21,00 | 21,00 | 21,00 |
| DMEA | 0,50 | 0,50 | 0,50 | 0,50 | 0,50 | 0,50 | 0,50 | 0,50 |
| dest. Wasser | 13,00 | 13,00 | 13,00 | 13,00 | 13,00 | 13,00 | 13,00 | 13,00 |
| Summe der Komponenten | 100,00 | 100,00 | 100,00 | 100,00 | 100,00 | 100,00 | 100,00 | 100,00 |
| | | | | | | | | |
| **pH -Wert eingestellt auf:** | **8,50** | | | | | | | |
| **Viskosität DIN 4** | **40 s** | | | | | | | |
| | | | | | | | | |
| **Diglycerid gemäß Beispiel 1** | | 1,40 | | | | | | |
| **Dehypon LS 54** | | | 1,40 | | | 0,28 | 0,28 | 0,28 |
| **Isopar L (aliph. KW)** | | | | 1,40 | 0,70 | 0,56 | 0,56 | 0,56 |
| **Diglycerid gemäß Beispiel 1** | | | | | 0,70 | 0,56 | | |
| **Diglycerid gemäß Beispiel 2** | | | | | | | 0,56 | |
| **Diglycerid gemäß Beispiel 3** | | | | | | | | 0,56 |
| | | | | | | | | |
| **3 Min. Diss. 5000 Upm.** | | | | | | | | |
| | | | | | | | | |
| **Dichte-Messungen:** | | | | | | | | |
| Dichtemessung nach 1 Min. | 0,714 | 1,012 | 0,792 | 0,968 | 1,002 | 0,995 | 0,992 | 0,982 |
| Dichtemessung nach 1 Std. | 0,824 | 1,045 | 0,832 | 1,025 | 1,047 | 1,048 | 1,045 | 1,044 |
| Dichtemesung nach 6 Std. | 0,991 | 1,054 | 1,053 | 1,052 | 1,055 | 1,055 | 1,054 | 1,055 |
| Dichtemessung nach 1 Tag | 1,056 | 1,056 | 1,055 | 1,053 | 1,056 | 1,055 | 1,055 | 1,055 |
| Dichtemessung nach 7 Tagen | 1,057 | 1,056 | 1,056 | 1,054 | 1,056 | 1,055 | 1,055 | 1,055 |

| | | | | | | | | |
|---|---|---|---|---|---|---|---|---|
| Versuche V1b-V5b = zum Vergleich Versuche V6b-V8b = erfindungsgemäß Mengenangaben zu den Komponenten der Rezeptur = Gewichtsteile | | | | | | | | |

## Patentansprüche

1. Entschäumer-Zusammensetzungen für wasserverdünbare Lacksysteme enthaltend
(a) ein oder mehrere Mono-, Di- und/oder Triester des Glycerins mit Fettsäuren mit 8 bis 24 C-Atomen (Glyceride),
(b) ein oder mehrere aliphatische Kohlenwasserstoffe und
(c) ein oder mehrere Anlagerungsprodukte von Ethylenoxid (EO) und/der Propylenoxid (PO) an Fettalkohole mit 8 bis 24 C-Atomen, wobei diese Anlagerungsverbindungen gegebenenfalls endgruppenverschlossen sein können.

2. Zusammensetzungen gemäß Anspruch 1, wobei man als Glyceride Diglyceride einsetzt (Diester des Glycerins mit Fettsäuren mit 8 bis 24 C-Atomen).

3. Zusammensetzung gemäß Anspruch 2, wobei man die Diglyceride in Form technischer Mischungen einsetzt.

4. Verwendung der Entschäumer-Zusammensetzungen gemäß Anspruch 1 für wasserverdünnbare Lacksysteme.

## Claims

1. Defoamer compositions for water-dilutable paint systems containing
a) one or more glycerides,
b) one or more aliphatic hydrocarbons and
c) one or more optionally end-capped addition products of ethylene oxide (EO) and/or propylene oxide (PO) onto C₈₋₂₄ fatty alcohols.

2. Compositions as claimed in claim 1, **characterized in that** diglycerides (diesters of glycerol with C₈₋₂₄ fatty acids) are used as the glycerides.

3. Composition as claimed in claim 2, **characterized in that** the diglycerides are used in the form of technical mixtures.

4. Use of the defoamer compositions claimed in claim 1 for water-dilutable paint systems.

## Revendications

1. Compositions d'antimousse pour systèmes de peintures diluables à l'eau, contenant
(a) un ou plusieurs mono-, di- et/ou triesters du glycérol avec des acides gras ayant de 8 à 24 atomes de carbone (glycérides),
(b) un ou plusieurs hydrocarbures aliphatiques et
(c) un ou plusieurs produits de fixation par addition d'oxyde d'éthylène (OE) et/ou d'oxyde de propylène (OP) sur des alcools gras ayant de 8 à 24 atomes de carbone, des composés d'addition pouvant éventuellement être terminés par des groupes en bout de chaîne.

2. Composition selon la revendication 1, dans laquelle on utilise comme glycérides des diglycérides (diesters du glycérol avec des acides gras ayant de 8 à 24 atomes de carbone).

3. Composition selon la revendication 2, dans laquelle les diglycérides sont utilisés sous forme de mélanges industriels.

4. Utilisation des compositions d'antimousses selon la revendication 1, pour des systèmes de peintures diluables à l'eau.
